# EUROPEAN PATENT SPECIFICATION

(11) **EP 3 105 628 B1**
(45) Date of publication and mention of the grant of the patent: **18.09.2019**
(21) Application number: 15718637.0
(22) Date of filing: 10.02.2015
(51) Int. Cl.: G02B 7/00, G02F 1/35, H01S 3/02

(54) **A MOUNT FOR TEMPERATURE STABILIZATION OF OPTICAL COMPONENTS**
BEFESTIGUNG ZUR TEMPERATURSTABILISIERUNG VON OPTISCHEN KOMPONENTEN
SUPPORT PERMETTANT UNE STABILISATION DE LA TEMPÉRATURE DE COMPOSANTS OPTIQUES

(30) Priority: 12.02.2014 SI 201400054
(43) Date of publication of application: 21.12.2016
(73) Proprietor: Optotek d.o.o., 1000 Ljubljana (SI)
(72) Inventor: NOSE, Janko, 1313 Struge (SI); GRUDEN, Igor, Ljubljana (SI); DOLZAN, Ales, 1270 Litija (SI); DOLGAN, Rudi, 1000 Ljubljana (SI); VRECKO, Andrej, 1000 Ljubljana (SI)
(74) Representative: Flak, Antonija
(86) International application number: PCT/SI2015/000005
(87) International publication number: WO 2015/122854

(56) References cited:
- EP-A1- 1 189 101
- EP-A1- 1 999 826
- JP-A- 2007 171 491
- JP-A- 2013 016 678
- US-A- 5 935 467
- US-A1- 2013 223 470
- US-B2- 8 298 335

## Description

The present invention relates to optoelectronic laser devices, more precisely it relates to a mount for optical components with an emphasis on its temperature stabilization and adjustment.

The technical problem, which is solved by the present invention, is how to ensure improved responsiveness of temperature stabilization of optical components, how to simplify their adjustment and in addition provide miniaturization and cost optimization of the optomechanical assembly while avoiding excessive or uneven thermal loads of optical components.

Stability of optical components in optoelectronic devices is the weak point of laser devices due to physical characteristics and due to frequent and rapid changes in temperature of their environment. Thermal changes may trigger thermooptic effects, as well as thermomechanical movements, which result in generation of mechanical stresses in material. It is important to keep the optical element at appropriate working temperature in order to ensure improved response times of temperature stabilization, to reduce movements caused by the heat and to avoid heat loads, while at the same time a stable mechanical location is maintained.

Examples of heavily heat loaded optical components in solid state laser sources are laser rod and crystal for second harmonic generation. In such optical components a part of pumped energy is transformed into heat, which is conductively transported onto the mechanical mount of the optical component. In order to prevent thermomechanical stresses it is crucial to ensure uniform removal of the heat from the entire side surfaces of the optical component. In addition, good temperature responsiveness of the optomechanic assembly is important, which can be achieved by miniaturization of the volume of the entire mechanical mount.

In the specific example of temperature stabilization of optical components, in which there are no large thermal loads and in which only stable temperature is important for optimal functioning, merely heating of the optical element to a fixed temperature is sufficient. The typical example of such application is temperature stabilization of crystals for second harmonic generation in systems for selective laser trabeculoplasty. In this case, it is important to stabilize only the environmental temperature in order to ensure stable frequency doubling. The most economical way to do this is to heat the crystal to a fixed temperature, which must be higher than the working temperature range of the final system. In this case uniform heating of the crystal is important for good response times of temperature stabilization and for a uniform transverse temperature profile of the optical component.

US patent application no. 2004/0165625 discloses a solution, in which the upper V block is additionally held by a spring, which decreases the risk of damaging the optical element due to temperature expansions. The main deficiency of this solution is the loss of thermal contact between the contact blocks and the holder, when the thermal expansion pushes the upper V block.

Patent application US2008/0247431 discloses a technical solution based on two springs, which allow sliding of the contact blocks, wherein two surfaces are in contact with the tempered part, while two surfaces are indirectly thermally connected. The main deficiencies of this solution are high thermal inertia and slower response times of the holder, which is based on at least three mechanical blocks, as well as non-flexibility of the solution, which does not allow thermal stabilization of optical components from the side of contact blocks. Additionally, this solution enables only mounting of optical elements having rectangular cross-section.

Further pertinent prior art is disclosed in US 5 935 467 A , EP 1 999 826 A1, US 8 298 335 B2, JP 2013 016678 A and EP 1 189 101 A1.

Because known solutions do not completely solve the problem of required responsiveness of temperature stability of the mount holding an optical element, the present invention improves temperature stabilization of an optical component by decreasing the volume of mechanics of the optical component mount. The invention is defined in the appended claims.

The essence of the mount for temperature stabilization of optical components lies in the fact that improved temperature responsiveness of the optomechanic assembly is achieved together with ensuring uniform heat supply or removal from the entire side surfaces of the optical element by decreasing the volume of a thermally active part of the mount and by placing heat conductive brackets so that they surround the optical element. In addition, the thermally active part of the mount may be disconnected from the thermally inactive part of the mount with point or linear contacts, or the thermally active part can be made of a material with high thermal conductvity, while the thermally inactive part can be made of a material with low thermal conductivity.

Simplification of the described mount for temperature stabilization of optical components represents a solution, according to which the mount of the optical component is constructed as a single piece. Additional simplification of the mount for temperature stabilization of optical components is enabled in case optical components have a cylindrical shape, in which the mechanical mount made from one piece can also function as a heat conductive bracket.

For a further understanding of the mount for temperature stabilization of optical components according to the invention, reference should be made to the following detailed disclosure, taken in conjunction with the accompanying figures, which show:
- Figure 1a: mount for temperature stabilization of optical components according to the invention
- Figure 1b: mount for temperature stabilization of optical components according to variant I
- Figure 1c: mount for temperature stabilization of optical components according to variant II
- Figure 1d: mount for temperature stabilization of optical components according to variant III
- Figure 2: explosion image of the mount for temperature stabilization of optical components according to the variant represented in figure 1a
- Figure 3: heating element for stabilization of optical components
- Figure 4a: side view of the mount for temperature stabilization of optical components
- Figure 4b: mount for temperature stabilization of optical components
- Figure 4c: detail B

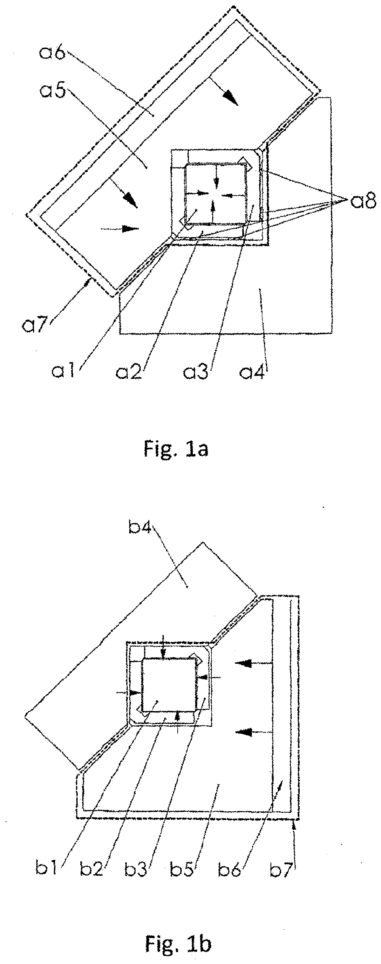

The mount for temperature stabilization of optical components has an optical element a1, which is around the greater part of the perimeter surrounded by two heat conductive brackets a2 and a3, and is installed into a rectangular cavity of a holder a4, which is closed by a pressing cover a5 with a heating element a6. The holder a4 is made of a material with low thermal conductivity, while the pressing cover a5 of the holder is made of a material with high thermal conductivity. Label a7 denotes a thermally active part of the mount, which is disconnected from the thermally inactive part, which allows decreasing of the volume of the thermally active mount and consequently improvement of response times of the entire assembly for temperature stabilization of the optical component. Brackets a2 and a3 are thermally regulated through the heating/cooling element a6 on the upper pressing cover a5. Heat conduction in case of the heating of the optical element a1 is represented by arrows in figure 1a. Brackets a2 and a3 are designed to be adapted to the shape of the optical element a1 on one side, and to the pressing cover a5 and the holder a4 with steel balls a8 on the other side. Between brackets a2 and a3 and the optical element a1 or between brackets a2 and a3 and the pressing cover a5 an indium foil may be placed, which enables more uniform distribution of pressure on the optical element and thereby increases the contact surface between the optical element and heat conductive brackets or between brackets and the pressing cover a5, respectively. The heat is conductively transported through conductive brackets a2 and a3, which uniformly heat the optical element on all four side surfaces. The thermally active part a7 is outlined with a dashed line on figure 1a and includes the optical element a1, brackets a2 and a3, the pressing cover a5 and the heating/cooling element a6. Simplification of the solution is enabled in the way that there are no point or line contacts between the holder and the brackets, wherein a partial disconnection between the thermally inactive and thermally active part of the mount is enabled by the holder made of a material with low thermal conductivity. This solution is preferably suitable for applications of temperature stabilization of optical components, which do not have large thermal loads. An example of such application is temperature stabilization of crystals for second harmonic generation in a system for selective laser trabeculoplasty. Due to small thermal loading of the optical component this solution also allows a variant, in which the holder can be made out of a material with high thermal conductivity, but this decreases the response time of the optomechanic assembly.

The mount for temperature stabilization of optical components according to variant I has an optical element b1, which is around the greater part of the perimeter surrounded by heat conductive brackets b2 and b3 and is installed into a rectangular cavity of a holder b5 with a heating/cooling element b6, which is closed by a pressing cover b4 of the mount. The holder b5 is made of a material with high thermal conductivity, while the pressing cover b4 is made of a material with low thermal conductivity. Label b7 denotes a thermally active part of the mount, which is disconnected from the thermally inactive part. This solution is also suitable in cases of thermal stabilization of optical components that are more heavily loaded as in the case of temperature stabilization of laser rods in laser resonator. The thermally active part is in figure 1b outlined with a dashed line and includes the optical element b1, brackets b2 and b3, the holder b5 and the heating/cooling element b6. This solution allows integration of larger or heavier heating/cooling systems.

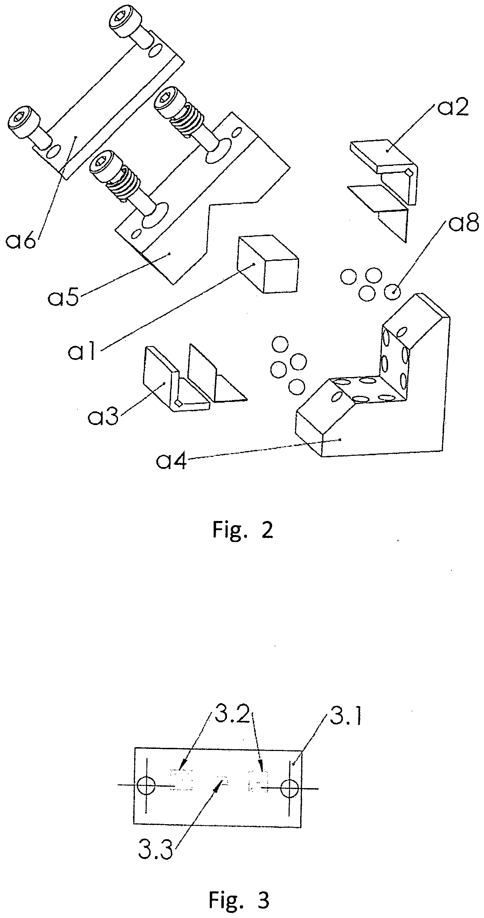

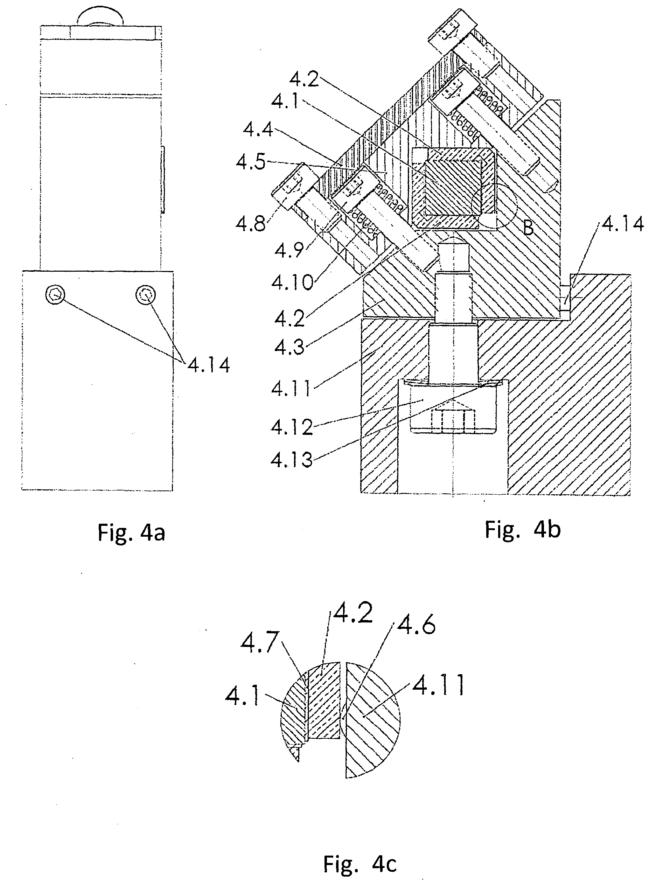

The optical element a1 is around the greater part of the perimeter surrounded by two heat conductive brackets a2 and a3 with a typical thickness of 1mm, which allows uniform thermal distribution. Disconnection between the thermally active part a7 and the thermally inactive part enables physically smaller thermally active part of the mount, which consequently improves response time of the entire mount. The same also applies for the optical element b1. Decreased heat transfer to the thermally inactive part of the mount is achieved by installing point or line contacts, which are shown by the detail in the figure 4c. As shown in figure 2, steel balls may be used for point contacts, whereas cylinders may be used for line contacts. Heat distribution in the optical component is improved if the mechanics of the thermally active part, to which the temperature regulation is attached, is made of a material with high thermal conductivity, while the thermally inactive part is made of a material with low thermal conductivity for example from combination copper/stainless steel, which can partly replace the function of point or line contacts. In addition, between the brackets and the optical element as well as between the brackets and a good thermally conductive part of the assembly a soft, highly heat conductive foil, for example indium foil, can be placed, which deforms under load and allows more uniform distribution of the pressure load and at the same time increases the contact surface for heat transfer. In both solutions 1a and 1b the appropriate mounting force of the optical component is ensured by screws 4.9 and a coil spring 4.10.

Mount for temperature stabilization of optical components according to variant II has a rectangularly shaped optical element c1, which is around the greater part of the perimeter surrounded by two heat conductive brackets c2 and c3 and is installed into a cylindrical cavity of holder c4, which is designed so that it has a cylindrical opening in the middle, and a slot c4'" between the lower part of the holder c4' and the upper part of the holder c4". Perpendicularly through the holder part c4', holder part c4" and the heating element c5 is a bore, into which a screw c7 with a spring washer c6 is mounted, compressing together the holder part c4', the holder part c4" and the heating element c5. The holder c4 is made of a material with high thermal conductivity. In case of integration of larger heating/cooling elements the latter can be added to the lower side of the holder c4, which allows installation of a suitable heat sink.

Mount for temperature stabilization of optical components according to variant III has a cylindrically shaped optical element d1, which is installed into the cavity of the holder d2 made of a material with high thermal conductivity, and which is shaped so that it has a cylindrical opening in the middle, and a slot d2'" between the lower part of the holder d2' and the upper part of the holder d2". Perpendicularly through the holder part d2', holder part d2" and the heating element d5 a bore is located, into which a screw d3 with a spring washer d5 is mounted, compressing together the holder part d2', the holder part d2" and the heating element d4. Spring washers d5 are used in order to ensure possibility of optical component expanding/shrinking when thermally loaded and to ensure a controlled loading of the optical component during assemby. The optical element d1 is installed with a loose fitting into an elastic clamp of the holder d2, which is made of a material with high thermal conductivity. With tightening of the screw d3 the elastic clamp of the holder d2 is deformed through a spring and the optical element is compressed through the indium foil. This allows a stable mechanic position of the optical component as well as a good thermal contact around the circumference, which still allows temperature expansion of the component. In case of integration of a larger heating/cooling elements the latter can be added to the lower side of the holder d2, which allows installation of a suitable heat sink.

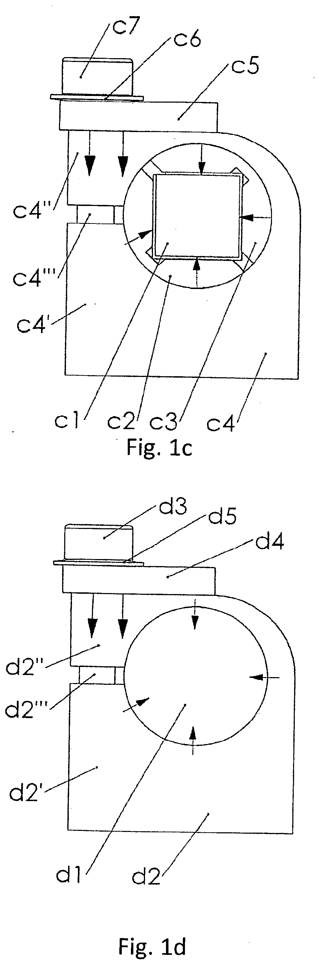

The mount for temperature stabilization of optical components according to variant II has only the thermally active part and two heat conductive brackets, which means that due to the simplified construction solution there is no need for a thermally inactive part of the mount and consequently installation of point or line contacts. In case of cylindrical optical components the entire solution is additionally simplified by construction of the holder from a single piece according to variant III, according to which its constructional solution makes the thermally inactive part and heat conductive brackets unnecessary, as shown in figure 1d. The base part of the holder is made of a material with high thermal conductivity and is designed in a such way that the optical element is installed into a cylindrical opening, which allows elastic mounting. The optical element d1 is inserted into the holder d2 and is then fixed with the help of a screw. Due to the elastic and also possible plastic deformation, the clamp embraces the optical element, thereby fixing it, so that uniform heat conduction is enabled throughout the barrel surface. A thin, soft, heat conductive foil may be added between the clamp and the optical component.

Solutions shown in figures 1a, 1b, 1c and 1d allow additional optimization of heat conduction and improved response times of the system for heating of the optical component to a fixed temperature with the help of a heating element, which is shown in figure 3. Heaters 3.2 and a temperature sensor 3.3 are soldered to the heat conductive print 3.1. Consequently the print 3.1 functions as a small self-regulating heater with uniformly distributed temperature, which also allows easy mechanical installation.

Constructions shown in figures 1a, 1c and 1d are particularly suitable for solutions in which adjustment or miniaturization of the mechanical assembly is required. All solutions allow installation of the heating/cooling element onto the pressing cover of the assembly, while the holder is not in contact with the remaining mechanical construction, which enables simple execution of the entire assembly adjustment, wherein the assembly is thermally disconnected from the remaining mechanical construction. Assembly adjustment will be further explained based on the solution shown in figure 1a.

Based on the solution shown in figure 1a, the following text describes installation of the mount of optical components, which can be applied to all previously mentioned mount variants. The mount for temperature stabilization of optical componets is shown in figures 4a, 4b and 4c. A holder 4.3 is installed onto a housing 4.11, wherein the holder has a cavity for a screw 4.12 with a spring washer 4.13. Into a triangular cavity of the holder 4.3 and onto heat conductive brackets 4.2 an optical element 4.1 is installed.

The heater 4.4 is attached with screws 4.8 to the pressing cover of the mount 4.5. The latter is in contact with heat conductive brackets 4.2 that heat the optical element 4.1 through the indium foil 4.7. An appropriate mounting force is ensured through screws 4.9 and coil spring 4.10. The thermally active part, which includes the optical element 4.1, heat conductive brackets 4.2, the heater 4.4, the pressing cover 4.5 and the foil 4.7 is insulated against other mechanics through steel balls 4.6, which are in point contact with brackets 4.2 and the holder 4.3. The holder 4.3 is attached to the housing 4.11 through a screw 4.12 and disc spring 4.13. Screw 4.12 axis represents the axis of adjustment, disc spring 4.13 reduces the backlash in the direction of the screw 4.12 axle, thermal insulation of the bracket holder against the housing is enabled with point or line contacts 4.6. A rotation around the screw 4.12 axis is done with adjustment screws 4.14, which are perpendicular to the screw 4.12. Adjustment is done with screwing one and simultaneously unscrewing the other screw. When the system is adjusted, both adjusting screws are tightened so that the backlash of the mechanics is reduced.

A combination of point contacts as shown in figure 4c and material with low thermal conductivity for the holder 4.3 is used for thermal insulation of the thermally active part. The holder 4.3 is additionally thermally insulated against the housing 4.11 with point contacts 4.6. The pressing force, with which the optical element 4.1 is compressed, is defined with deformation of coil springs 4.10.

Mount for temperature stabilization of optical components allows its integration into a device and its adjustment with the help of three screws.

The technical solution of the mount for temperature stabilization of optical components according to the invention ensures improved response times and solution flexibility. Improved response times are possible due to the decreased volume of mechanical components. The flexibility of the solution most importantly reflects in the miniaturization of the assembly, in the possibility of its use for optical components with different geometries, in the possibility of mounting miniaturized heaters and in the possibility of simple adjustment of the entire assembly.

## Claims

1. A mount for temperature stabilization of optical components with improved temperature responsiveness of an optomechanic assembly together with uniform heat supply or removal from the entire side surfaces of the optical component, comprising
- an optical element (a1, b1),
- a holder (a4, b5),
- a pressing cover (a5, b4),
- a rectangular cavity, which is formed by a triangular cavity of the holder (a4, b5) and a triangular cavity of the pressing cover (a5, b4), wherein the rectangular cavity receives the optical element (a1, b1),
- heat conductive brackets (a2 and a3; b2 and b3), which surround the majority of the perimeter of the optical element (a1, b1) and are adapted to the shape of the optical element (a1, b1) and the holder (a4, b5) and the pressing cover (a5, b4),
- a heating/cooling element (a6, b6), which thermally regulates the heat conductive brackets (a2 and a3, b2 and b3),
**characterized in that**
the holder (a4, b5) and the pressing cover (a5, b4) are made of a material with different thermal conductivity;
that when the holder (a4, b5) is made of a material with high thermal conductivity, then the pressing cover (a5, b4) is made of a material with low thermal conductivity, thereby the holder (a4, b5) becoming a thermally active part and the pressing cover (a5, b4) thermally inactive part, the thermally active part also including the optical element (a1, b1), the heat conductive brackets (a2 and a3, b2 and b3) and the heating/cooling element (a6, b6);;
that when the holder (a4, b5) is made of a material with low thermal conductivity, then the pressing cover (a5, b4) is made of a material with high thermal conductivity, thereby the holder (a4, b5) becoming a thermally inactive part and the pressing cover (a5, b4) a thermally active part, the thermally active part also including the optical element (a1, b1), the heat conductive brackets (a2 and a3, b2 and b3) and the heating/cooling element (a6, b6);
that the thermally active part and the thermally inactive part are disconnected with point or line contacts (a8) placed between said thermally active part and said thermally inactive part, wherein the point contacts are steel balls and line contacts are cylinders.

2. The mount according to claim 1, **characterized in that** the heating/cooling element (a6) is installed into the holder (a4, b5) or into the pressing cover (a5, b4).

3. The mount according to any of the preceding claims, **characterized in that** an indium foil can be placed between heat conductive brackets (a2, and a3, b2 and b3) and the optical element (a1, b1) or between heat conductive brackets(a2, and a3, b2 and b3) and the pressing cover (a5, b4).

4. The mount according to any of the preceding claims, **characterized in that** when heating of the optical components to a fixed temperature additional optimization of heat conduction and improved response times are achieved with the heating element consisting of heating elements (3.2) and a temperature sensor (3.3), which are soldered to a heat conductive print (3.1) with high thermal conductivity.

5. Method for installation and adjustment of the mount according to any of the preceding claims into a device, the method comprising the following steps:
- the holder (a4, b5, 4.3) is installed onto housing (4.11) for the mount, wherein the holder has a cavity for a screw (4.12) with a spring washer (4.13);
- the optical element (a1, b1, 4.1) is installed into the triangular cavity of the holder (a4, b5, 4.3) and onto heat conductive brackets (a2 and a3, b2 and b3, 4.2);
- the heater (a6, b6, 4.4) is tightened with screws (4.8) to the pressing cover (a5, b4, 4.5) of the mount;
- the pressing cover (a5, b4, 4.5) of the mount is in contact with heat conductive brackets (a2 and a3, b2 and b3, 4.2) that heat the optical element (a1, b1, 4.1) through the indium foil (4.7);
- an appropriate mounting force is ensured through screws (4.9) and a coil spring (4.10)
- the thermally active part, which includes the optical element (4.1) heat conductive brackets (a2 and a3, b2 and b3, 4.2), the heater (a6, b6, 4.4), the indium foil (4.7) and the holder (a4, b5, 4.3) or the pressing cover (a5, b4, 4.5) depending on the material from which they are made, is insulated against other mechanics through steel balls (a8, 4.6), which are in point contact with brackets (a2 and a3, b2 and b3, 4.2) and the holder (a4, b5, 4.3);
- the holder (a4, b5, 4.3) is attached through a screw (4.12) and a disc spring (4.13) to the housing (4.11);
- the screw (4.12) axis represents the axis of adjustment, disc spring (4.13) reduces the backlash in the direction of the screw (4.12) axis, thermal insulation of the bracket holder against the housing is made through point or line contacts (a8, 4.6);
- rotation around the screw (4.12) axis is made with adjustment screws (4.14), which are perpendicular to the screw (4.12); and
- the adjustment coincides with tightening one and untightening the other screw.

6. The method according to claim 5, **characterized in that** adjustment of the mount according to any claim from 1 to 4 is done with three adjusting screws.

## Patentansprüche

1. Halterung zur Temperaturstabilisierung von optischen Komponenten mit verbesserter Temperaturansprechbarkeit einer optomechanischen Baugruppe zusammen mit gleichmäßiger Wärmezufuhr oder Entfernung von den gesamten Seitenflächen des optischen Bauteils, umfassend
- ein optisches Element (a1, b1),
- einen Halter (a4, b5),
- einen Pressdeckel (a5, b4),
- einen rechteckigen Hohlraum, der durch einen dreieckförmigen Hohlraum des Halters (a4, b5) und einen dreieckförmigen Hohlraum des Pressdeckels (a5, b4) gebildet ist, wobei der rechteckige Hohlraum das optische Element (a1, b1) aufnimmt,
- Wärmeleitbügel (a2 und a3; b2 und b3), die den Großteil des Umfangs des optischen Elements (a1, b1) umgeben und an die Form des optischen Elements (a1, b1) und des Halters (a4, b5) und des Pressdeckels (a5, b4) angepasst sind
- ein Heiz-/Kühlelement (a6, b6), das die Wärmeleitbügel (a2 und a3, b2 und b3) thermisch regelt,
**dadurch gekennzeichnet, dass**
der Halter (a4, b5) und der Pressdeckel (a5, b4) aus einem Material mit unterschiedlicher Wärmeleitfähigkeit gefertigt sind;
wenn der Halter (a4, b5) aus einem Material mit hoher Wärmeleitfähigkeit gefertigt ist, wird der Pressdeckel (a5, b4) aus einem Material mit geringer Wärmeleitfähigkeit gefertigt, wodurch der Halter (a4, b5) zu einem thermisch wirksamen Teil wird und der Pressdeckel (a5, b4) zu einem thermisch inaktiven Teil wird, wobei das thermisch aktive Teil auch das optische Element (a1, b1), die Wärmeleitbügel (a2 und a3, b2 und b3) und das Heiz-/Kühlelement (a6, b6) umfasst;
wenn der Halter (a4, b5) aus einem Material mit geringer Wärmeleitfähigkeit gefertigt ist, wird der Pressdeckel (a5, b4) aus einem Material mit hoher Wärmeleitfähigkeit gefertigt, wodurch der Halter (a4, b5) zu einem thermisch inaktiven Teil und der Pressdeckel (a5, b4) zu einem thermisch aktiven Teil wird, wobei das thermisch aktive Teil auch das optische Element (a1, b1), die Wärmeleitbügel (a2 und a3, b2 und b3) und das Heiz/Kühlelement (a6, b6) umfasst;
das thermisch aktive Teil und das thermisch inaktive Teil mit Punkt- oder Linienkontakten (a8) getrennt sind, die zwischen dem thermisch aktiven Teil und dem thermisch inaktiven Teil angeordnet sind, wobei die Punktkontakte Stahlkugeln sind und Linienkontakte Zylinder sind.

2. Halterung nach Anspruch 1, **dadurch gekennzeichnet, dass** das Heiz/Kühlelement (a6) im Halter (a4, b5) oder im Pressdeckel (a5, b4) eingebaut ist.

3. Halterung nach einem der vorhergehenden Ansprüche, **dadurch gekennzeichnet, dass** eine Indiumfolie zwischen den Wärmeleitbügeln (A2 und a3, b2 und b3) und dem optischen Element (a1, b1) oder zwischen den Wärmeleitbügeln (a2 und a3, b2 und b3) und dem Pressdeckel (a5, b4) angeordnet sein kann.

4. Halterung nach einem der vorhergehenden Ansprüche, **dadurch gekennzeichnet, dass** beim Erwärmen der optischen Komponenten auf eine feste Temperatur, eine Zusatzoptimierung der Wärmeleitung und verbesserte Ansprechzeiten erreicht werden mit dem Heizelement bestehend aus Heizelementen (3.2) und einem Temperatursensor (3.3), die auf einen Wärmeleitdruck (3.1) mit hoher Wärmeleitfähigkeit verlötet sind.

5. Verfahren zum Montieren und Justieren der Halterung nach einem der vorhergehenden Ansprüche in eine Vorrichtung, wobei das Verfahren die folgenden Schritte umfasst:
- der Halter (a4, b5, 4.3) wird an einem Gehäuse (4.11) für die Halterung angebracht, wobei der Halter einen Hohlraum für eine Schraube (4.12) mit einer Federscheibe (4.13) aufweist;
- das optische Element (a1, b1, 4.1) wird in dem dreieckförmigen Hohlraum des Halters (a4, b5, 4.3) und auf die Wärmeleitbügel (a2 und a3, b2 und b3, 4.2) eingebaut;
- der Heizer (a6, b6, 4.4) wird mit Schrauben (4.8) an dem Pressdeckel (a5, b4, 4.5) des Halters verschraubt;
- der Pressdeckel (a5, b4, 4.5) der Halterung steht mit Wärmeleitbügeln (a2 und a3, b2 und b3. 4.2) in Kontakt, die das optische Element (a1, b1, 4.1) durch die Indiumfolie (4.7) erwärmen;
- eine entsprechende Montagekraft wird durch Schrauben (4,9) und eine Schraubenfeder (4.10) gewährleistet;
- das thermisch aktive Teil, welches das optische Element (4.1), die Wärmeleitbügel (a2 und a3, b2 und b3, 4.2), die Heizung (a6, b6, 4.4), die Indiumfolie (4.7) und den Halter (a4, b5, 4.3) oder den Pressdeckel (a5, b4, 4.5) umfasst, je nach Material, aus dem sie gefertigt sind, wird gegen eine andere Mechanik durch Stahlkugeln (a8, 4.6) isoliert, die in Punktkontakt mit den Bügeln (a2 und a3, b2 und b3, 4.2) und dem Halter (a4. b5. 4.3) stehen;
- der Halter (a4, b5, 4.3) wird über eine Schraube (4.12) und eine Tellerfeder (4.13) an dem Gehäuse (4.11) befestigt;
- die Achse der Schraube (4.12) stellt die Verstellachse dar, die Tellerfeder (4.13) reduziert das Spiel in Richtung der Achse der Schraube (4.12), die thermische Isolierung des Bügelhalters gegen das Gehäuse erfolgt über Punkt- oder Linienkontakte (a8, 4.6);
- eine Drehung um die Achse der Schraube (4.12) erfolgt mit Justierschrauben (4.14), die senkrecht zur Schraube (4.12) stehen; und
- die Justierung fällt mit Anziehen der einen und Lösen der anderen Schraube zusammen.

6. Verfahren nach Anspruch 5, **dadurch gekennzeichnet, dass** die Justierung der Halterung nach einem der Ansprüche 1 bis 4 mit drei Stellschrauben erfolgt.

## Revendications

1. Support permettant une stabilisation de la température de composants optiques avec une meilleure thermosensibilité de l'ensemble optomécanique conjointement avec un apport de chaleur uniforme ou une élimination de chaleur uniforme depuis toutes les surfaces latérales du composant optique, comprenant
- un élément optique (a1, b1),
- un support (a4, b5),
- un couvercle de pression (a5, b4),
- une cavité rectangulaire, qui est formée par une cavité triangulaire du support (a4, b5) et une cavité triangulaire du couvercle de pression (a5, b4), la cavité rectangulaire recevant l'élément optique (a1, b1),
- des supports thermoconducteurs (a2 et a3 ; b2 et b3), qui entourent la majorité du périmètre de l'élément optique (a1, b1) et sont adaptés à la forme de l'élément optique (a1, b1) et du support (a4, b5) et du couvercle de pression (a5, b4),
- un élément de chauffage/refroidissement (a6, b6), qui régule la température des supports thermoconducteurs (a2 et a3, b2 et b3),
**caractérisé en ce que**
le support (a4, b5) et le couvercle de pression (a5, b4) sont constitués d'un matériau ayant une conductivité thermique différente ;
**que**, lorsque le support (a4, b5) est constitué d'un matériau présentant une conductivité thermique élevée, alors que le couvercle de pression (a5, b4) est constitué d'un matériau à faible conductivité thermique, ce qui permet au support (a4, b5) de devenir une partie thermiquement active et la partie de couverture de pression (a5, b4) de devenir une partie thermiquement inactive, la partie thermiquement active comprenant également l'élément optique (a1, b1), les supports thermoconducteurs (a2 et a3, b2 et b3) et l'élément de chauffage/refroidissement (a6, b6) ;
**que** lorsque le support (a4, b5) est constitué d'un matériau à faible conductivité thermique, alors le couvercle de pression (a5, b4) est constitué d'un matériau ayant une conductivité thermique élevée, ce qui permet au support (a4, b5) de devenir une partie thermiquement inactive et au couvercle de pression (a5, b4) une partie thermiquement active, la partie thermiquement active comprenant également l'élément optique (a1, b1), les supports thermoconducteurs (a2 et a3, b2 et b3) et l'élément de chauffage/refroidissement (a6, b6) ;
**que** la partie thermiquement active et la partie thermiquement inactive sont déconnectées par le biais de contacts de point ou de ligne (a8) placés entre ladite partie thermiquement active et ladite partie thermiquement inactive, les contacts de point étant des billes en acier et les contacts de ligne étant des cylindres.

2. Support selon la revendication 1, **caractérisé en ce que** l'élément de chauffage/refroidissement (a6) est installé dans le support (a4, b5) ou dans le couvercle de pression (a5, b4).

3. Support selon l'une quelconque des revendications précédentes, **caractérisé en ce qu'**une feuille d'indium peut être placée entre les supports thermoconducteurs (a2 et a3, b2 et b3) et l'élément optique (a1, b1) ou entre les supports thermoconducteurs (a2 et a3, b2 et b3) et le couvercle de pression (a5, b4).

4. Support selon l'une quelconque des revendications précédentes **caractérisé en ce que**, lorsque les composants optiques sont chauffés à une température fixe, une optimisation supplémentaire de la conduction thermique et de meilleurs temps de réponse sont obtenus avec l'élément chauffant constitué d'éléments chauffants (3.2) et d'un capteur de température (3.3), qui sont soudés à une impression thermoconductrice (3.1) à conductivité thermique élevée.

5. Procédé d'installation et de réglage du support selon l'une quelconque des revendications précédentes dans un dispositif, le procédé comprenant les étapes suivantes:
- le support (a4, b5, 4.3) est installé sur le boîtier (4.11) du support et présente une cavité pour une vis (4.12) avec une rondelle élastique (4.13) ;
- l'élément optique (a1, b1, 4.1) est installé dans la cavité triangulaire du support (a4, b5, 4.3) et sur les supports thermoconducteurs (a2 et a3, b2 et 4.2) ;
- le dispositif de chauffage (a6, b6, 4.4) est serré avec des vis (4.8) sur le couvercle de pression (a5, b4, 4.5) du support ;
- le couvercle de pression (a5, b4, 4.5) du support est en contact avec les supports thermoconducteurs (a2 et a3, b2 et b3, 4.2) qui chauffent l'élément optique (a1. b1. 4.1) à travers la feuille d'indium (4.7) ;
- une force de montage appropriée est assurée par l'intermédiaire de vis (4.9) et d'un ressort hélicoïdal (4.10) ;
- la partie thermiquement active, qui comprend l'élément optique (4.1), les supports thermoconducteurs (a2 et a3, b2 et b3, 4.2), le dispositif de chauffage (a6, b6, 4,4), la feuille d'indium (4,7) et le support (a4, b5, 4.3) ou le couvercle de pression (a5, b4, 4.5) en fonction du matériau à partir duquel ils sont fabriqués, est isolé vis-à-vis d'autres mécaniques par l'intermédiaire de billes en acier (a8, 4.6), qui sont en contact de point avec les supports (a2 et a3, b2 et b3, 4.2) et le support (a4, b5, 4.3) ;
- le support (a4, b5, 4.3) est fixé au boîtier (4.11) par une vis (4.12) et un ressort à disque (4.13) ;
- l'axe de la vis (4.12) représente l'axe de réglage, le ressort à disque (4.13) réduit le jeu dans la direction de l'axe de la vis (4.12), l'isolation thermique de l'étrier du support contre le boîtier est réalisée par l'intermédiaire de contacts de point ou de ligne (a8, 4.6) ;
- la rotation autour de l'axe de la vis (4.12) est réalisée avec des vis de réglage (4.14) qui sont perpendiculaires à la vis (4.12) ; et
- le réglage coïncide avec le serrage d'une vis et le desserrage de l'autre vis.

6. Procédé selon la revendication 5, **caractérisé en ce que** le réglage du support selon l'une quelconque des revendications 1 à 4 est réalisé à l'aide de trois vis de réglage.
